# EUROPEAN PATENT SPECIFICATION

(11) **EP 2 803 928 B1**
(45) Date of publication and mention of the grant of the patent: **28.12.2016**
(21) Application number: 13735885.9
(22) Date of filing: 09.01.2013
(51) Int. Cl.: F27B 9/34, C04B 35/638, F27B 9/02, F27B 9/26, C04B 35/478, C04B 35/64, C04B 40/00, F27B 9/04, F27B 9/12, F27B 9/20, F27B 9/30

(54) **TUNNEL KILN AND METHOD FOR PRODUCING FIRED BODY USING SAME**
TUNNELBRENNOFEN UND VERFAHREN ZUR HERSTELLUNG EINES GEBRANNTEN KÖRPERS DAMIT
FOUR TUNNEL ET PROCÉDÉ PERMETTANT DE PRODUIRE UN CORPS CHAUFFÉ À L'AIDE DE CE DERNIER

(30) Priority: 12.01.2012 JP 2012004299
(43) Date of publication of application: 19.11.2014
(73) Proprietor: Sumitomo Chemical Company, Limited, Tokyo 104-8260 (JP)
(72) Inventor: SUZUKI, Keiichiro, Ehime 792-8521 (JP); KOMORI, Teruo, Ehime 792-0804, (JP)
(74) Representative: Vossius & Partner Patentanwälte Rechtsanwälte mbB
(86) International application number: PCT/JP2013/050206
(87) International publication number: WO 2013/105578

(56) References cited:
- EP-A1- 2 687 801
- WO-A1-99/32844
- JP-A- H03 260 591
- JP-A- 2001 525 531

## Description

### Technical Field

The present invention relates to a technique for producing a fired body, and more specifically relates to a technique for producing a fired body from a green body containing an organic component.

### Background Art

Conventionally, a honeycomb filter structure having a large number of through-holes has been widely known for diesel particulate filters and the like. Such a honeycomb filter structure is produced by plugging, with a plugging material, one end of each of a part of through-holes of a green body produced by an extruder, while also plugging, with a plugging material, one end on the opposite side of each of the remaining through-holes, and then firing this. In JP 2001-525531 (Patent Literature 1) and JP 2001-527202 (Patent Literature 2), a tunnel kiln for firing a ceramic honeycomb structure is disclosed.

JP-3-260591A discloses a tunnel kiln comprising: a tunnel kiln main body having an inner wall constituted by a furnace material and a sintering zone wherein sintering of a body to be fired containing an organic component are performed; and a conveying unit for conveying the body to be fired from an inlet side to an outlet side of the tunnel kiln main body.

### Summary of Invention

### Technical Problem

Meanwhile, the honeycomb filter structure for diesel particulate filters has a cell structure made of a porous partition wall. Exhaust gas of a diesel engine passes through the partition wall to thereby allow a particulate substance included in the exhaust gas to be removed. The green body contains an organic component such as an organic binder and a pore-forming agent. The pore-forming agent disappears by firing to thereby form the porous partition wall.

When the green body is fired, a high oxygen concentration in a furnace may cause the organic component contained in the green body to rapidly combust. Such rapid combustion of the organic component results in a rapid increase in the temperature of a body to be fired. As a result, cracks tend to occur on the resulting fired body. As a measure for solving such a drawback, it is considered to reduce the oxygen concentration in the furnace to about 1 to 5% by volume in a debinding step (step of heating the body to be fired to remove the organic component).

While the reduction in the oxygen concentration in the furnace overcomes the above drawback, however, the organic component contained in the green body does not completely combust, and hydrocarbon (HC) and carbon monoxide (CO) which cause tar are generated in the furnace. In the case of a batch type firing furnace, even if tar is generated in the furnace, most thereof combusts and disappears due to the subsequent increase in temperature. On the contrary, the problem with the tunnel kiln is that tar tends to accumulate in a region of a temperature band in which the debinding step is performed.

In the tunnel kiln, the temperature distribution in a furnace is set in advance and a wheeled platform that loads a body to be fired sequentially passes through the respective temperature bands in the furnace to thereby allow processes such as debinding and sintering to proceed. The region in which the debinding step is performed is maintained at a temperature proper for debinding (for example, 100 to 600°C), and the temperature thereof is not raised at a normal operation to such a degree that tar combusts and disappears. Therefore, tar is attached to a furnace material (heat-insulating material such as a firebrick and ceramic fibers) constituting the inner wall of the region to contaminate the furnace material. Tar may cause the furnace material to be degraded and also be brought into contact with a gas having a high oxygen concentration (for example, air) under a high temperature condition to ignite. Tar attached or soaked into the furnace material is difficult to remove, and it is thus required to periodically replace the furnace material.

The present invention has been made in view of the above problems, and an object thereof is to provide a tunnel kiln whose maintenance is easy and where the lifetime of a furnace material can be longer even if tar is generated in a furnace in a debinding step of an organic component contained in a body to be fired, and a method for producing a fired body using the same.

### Solution to Problem

This object is achieved with the features of claims 1 and 5. Further embodiments are described in the dependent claims.

According to the tunnel kiln of the invention, tar can be sufficiently prevented from attaching or soaking into the furnace material by the lining with which the inner wall of the debinding zone is covered. The lining can be constituted by a material that is dense and that has shielding property (for example, stainless). Even if being attached to the lining, tar can be easily cleaned off as compared with the case where tar is attached to the furnace material. In the case where the lining is degraded by tar or the like, it is sufficient only to replace the lining with new one.

The tunnel kiln may further comprise an oxygen concentration adjustment unit for reducing an oxygen concentration in the debinding zone. As the oxygen concentration in the debinding zone is reduced, the organic component is hard to completely combust, and therefore the amount of tar generated is increased. Accordingly, in the case where operation is carried out under a low oxygen concentration in a furnace, disposing of the lining is particularly useful. In addition, in the case where the content of the organic component in the body to be fired is relatively high, there is such an advantage that cracks can be highly inhibited from occurring on a fired body by performing debinding and firing under a low oxygen concentration.

The debinding zone of the tunnel kiln main body may have a region where the organic component contained in the body to be fired is to be gasified and a region where the gasified organic component is to be condensed. The lining has a cold spot where a temperature of a surface of the lining is partially lower. The cold spot is provided on the lining to thereby allow the gasified organic component to be easily cooled and condensed on the spot. Thus, it is possible to inhibit tar from attaching to a wide range of the lining to thereby make maintenance further effective.

The tunnel kiln main body may further have a cooling zone wherein the fired body is cooled, at an outlet side over the sintering zone. When the tunnel kiln main body is provided with the cooling zone to allow the fired body to move through the zone to be cooled, it is possible to take out the fired body without decreasing the temperature of the entire of the tunnel kiln main body after firing. Thus, it is possible to use the tunnel kiln as a continuous type firing furnace.

According to the method of claim 5 for producing the fired body, tar can be sufficiently prevented from attaching or soaking into the furnace material by the lining with which the inner wall of a debinding zone is covered. Even if being attached to the lining, tar can be easily cleaned off as compared with the case where tar is attached to the furnace material. In the case where the lining is degraded by tar or the like, it is sufficient only to replace the lining with new one.

### Advantageous Effects of Invention

According to the present invention, a tunnel kiln whose maintenance is easy and which allows its furnace material to have longer lifetime, even if tar is generated in a furnace in a debinding step of an organic component contained in a body to be fired, and a method for producing a fired body using the same are provided.

### Brief Description of Drawings

Figure 1(a) is a perspective view illustrating one example of a green molded body for honeycomb structures, and Figure 1(b) is a partially enlarged view of the green molded body.
Figure 2 is a configuration view illustrating a suitable embodiment of a tunnel kiln according to the present invention.
Figure 3 is a cross-sectional view schematically illustrating one example of a cold spot.
Figure 4 is a view illustrating another example of the green molded body.
Figure 5 is a graph showing one example of firing conditions (temperature and oxygen concentration).
Figure 6 is a graph showing measured values of a HC concentration and a carbon monoxide concentration in a debinding step.

### Description of Embodiments

Hereinafter, a suitable embodiment of the present invention is described in detail with reference to the drawings. Herein, a green molded body for producing a honeycomb filter structure is described with an example. This green molded body is a body to be fired containing an organic component in a relatively large amount.

### <Green molded body>

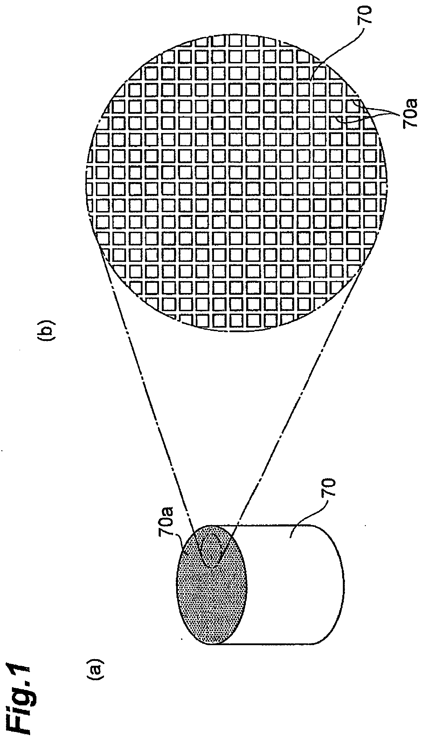

A green molded body 70 illustrated in Figure 1 is one obtained by extruding a raw material composition. As illustrated in Figure 1(a), the green molded body 70 is a cylindrical body in which a large number of through-holes 70a are arranged in substantially parallel. The cross-sectional shape of each of the through-holes 70a is square as illustrated in Figure 1(b). Such a plurality of the through-holes 70a are arranged in the green molded body 70 in square as seen from the end surface side, that is, arranged so that the central axis of each of the through-holes 70a is located on the comer of the square. The size of the square of the cross section of each of the through-holes 70a can be, for example, 0.8 to 2.5 mm on a side. After one end of each of the through-holes 70a is appropriately plugged, the green molded body 70 is fired using a tunnel kiln 10 described later to thereby produce a honeycomb structure.

The length of the direction in which the through-holes 70a of the green molded body 70 extend is not particularly limited, but can be, for example, 40 to 350 mm. In addition, the outer diameter of the green molded body 70 is also not particularly limited, but can be, for example, 100 to 320 mm.

The raw material composition that forms the green molded body 70 is not particularly limited, but in the case of producing a honeycomb structure for diesel particulate filters, includes an inorganic compound source powder serving as a ceramics raw material, and an organic binder such as methylcellulose, as well as an additive added if necessary. From the viewpoint of high-temperature resistance of the honeycomb structure, a suitable ceramics material includes oxides such as alumina, silica, mullite, cordierite, glass and aluminum titanate, silicon carbide, and silicon nitride. Herein, aluminum titanate can further include magnesium and/or silicon.

For example, in the case where a green molded body of aluminum titanate is produced, the inorganic compound source powder can include an aluminum source powder such as an α-alumina powder, and a titanium source powder such as an anatase type or rutile type titania powder, and if necessary, further a magnesium source powder such as a magnesia powder or a magnesia spinel powder and/or a silicon source powder such as a silicon oxide powder or a glass frit.

Examples of the organic binder include celluloses such as methylcellulose, caxboxylmethylcellulose, hydroxyalkylmethylcellulose and sodium carboxylmethylcellulose; alcohols such as polyvinyl alcohol; and lignosulfonate.

Examples of the additive include a pore-forming agent, a lubricant and a plasticizer, a dispersant, and a solvent.

Examples of the pore-forming agent include a carbon material such as graphite; resins such as polyethylene, polypropylene and polymethylmethacrylate; a vegetable material such as starch, a nuts shell, a walnut shell and corn; ice; and dry ice.

Examples of the lubricant and the plasticizer include alcohols such as glycerin; higher fatty acids such as caprylic acid, lauric acid, palmitic acid, arachidic acid, oleic acid and stearic acid; a stearic acid metal salt such as stearic acid Al, and polyoxyalkylene ether.

Examples of the dispersant include inorganic acids such as nitric acid, hydrochloric acid and sulfuric acid; organic acids such as oxalic acid, citric acid, acetic acid, malic acid and lactic acid; alcohols such as methanol, ethanol and propanol; and a surfactant such as ammonium polycarboxylate.

As the solvent, it is possible to use alcohols such as methanol, ethanol, butanol and propanol; glycols such as propylene glycol, polypropylene glycol and ethylene glycol; and water.

The total amount of the organic component contained in the green molded body 70 is preferably 10 to 25 parts by mass and more preferably 15 to 20 parts by mass relative to 100 parts by mass of the green molded body 70. If the amount of the organic component is less than 10 parts by mass, the moldability of the green molded body 70 tends to be insufficient and the porosity after firing tend to be small. On the other hand, if the amount of the organic component is more than 25 parts by mass, the amount of tar generated in the debinding step tends to be increased and cracks tend to occur on a fired body.

### <Tunnel kiln>

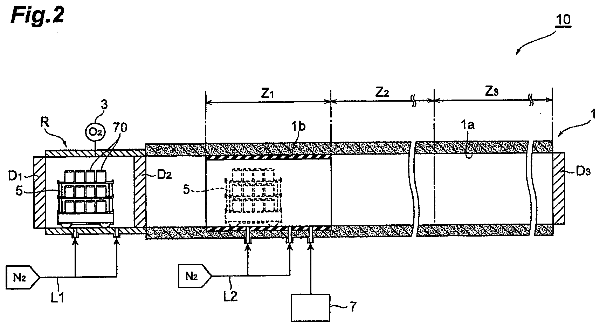

With reference to Figure 2, a tunnel kiln according to the present embodiment is described. As illustrated in Figure 2, a tunnel kiln 10 includes a tunnel kiln main body 1 in which an inner wall 1a is constituted by a furnace material; a replacement chamber R provided on the inlet of the tunnel kiln main body 1; and a wheeled platform (conveying unit) 5 for simultaneously conveying a plurality of green molded bodies 70 from the inlet side to the outlet side of the tunnel kiln main body 1 (from the left side to the right side in Figure 2).

The replacement chamber R is provided so as not to increase the oxygen concentration in the furnace along with carrying of the wheeled platform 5 into the tunnel kiln main body 1. The replacement chamber R has a door D₁ at the inlet side, a door D₂ at the outlet side, a nitrogen source N₂ and a pipe L1 for feeding nitrogen gas into the replacement chamber R, and a sensor 3 for measuring the oxygen concentration in the replacement chamber R. When the wheeled platform 5 is put in the replacement chamber R, the door D₁ at the inlet side is opened in the state where the door D₂ at the outlet side (the door of the inlet of the tunnel kiln main body) is closed. After the wheeled platform 5 is put in the replacement chamber R, the door D₁ is closed. Thereafter, nitrogen gas is fed into the replacement chamber R to reduce the oxygen concentration in the replacement chamber R. After the oxygen concentration in the replacement chamber R is sufficiently reduced, the door D₂ is opened to put the wheeled platform 5 in the tunnel kiln main body 1. Herein, nitrogen gas is preferable as a gas for reducing the oxygen concentration in terms of cost, but helium gas, argon gas, or a mixed gas thereof may also be used instead of nitrogen gas.

When the wheeled platform 5 is put in the tunnel kiln main body 1 from the replacement chamber R, the state where the oxygen concentration in the replacement chamber R is lower than the oxygen concentration in the tunnel kiln main body 1 is preferable. For example, in the case where a debinding treatment is performed in the tunnel kiln main body 1 (debinding zone Z1 described later) in an oxygen concentration of 2% by volume or less, it is preferable to reduce the oxygen concentration in the replacement chamber R to less than 2% by volume (more preferably 1% by volume or less). In the case where the debinding treatment is performed in an oxygen concentration of 1% by volume or less, it is preferable to reduce the oxygen concentration in the replacement chamber R to less than 1% by volume (more preferably 0.5% by volume or less).

The tunnel kiln main body 1 is provided so that the green molded body 70 loaded on the wheeled platform 5 is moved from the inlet side to the outlet side to thereby provide a fired body of the green molded body 70. The inner wall 1a of the tunnel kiln main body 1 is made of a heat-insulating material (furnace material) such as firebrick, a ceramic fiber and a glass fiber. The interior of the tunnel kiln main body 1 is divided into a debinding zone Z1, a sintering zone Z2 and a cooling zone Z3 depending on the temperature conditions. The total length of the tunnel kiln main body 1 may also extend over 100 m. The total length depends on the temperature setting of the respective zones, the composition of the green molded body 70, and the like.

The debinding zone Z1 is a zone for performing a removing step (debinding step) of heating the green molded body 70 to remove the organic component contained in the body 70. The range of the debinding zone Z1 can be a range of temperature conditions where the organic component contained in the green molded body 70 is gasified or combusts. While depending on the organic component contained in the green molded body 70, the inlet side temperature (lower limit temperature) of the debinding zone Z1 is preferably 120°C or lower, more preferably 100°C or lower, and further preferably 80°C or lower. On the other hand, the outlet side temperature (upper limit temperature) of the debinding zone Z1 is preferably 600°C or higher, more preferably 700°C or higher, and further preferably 800°C or higher. If the inlet side temperature of the debinding zone Z1 is more than 120°C, debinding may be started before the green molded body 70 reaches the debinding zone Z1. If the outlet side temperature of the debinding zone Z1 is less than 600°C, the debinding treatment of the green molded body 70 may not be sufficiently completed in the debinding zone Z1.

As illustrated in Figure 2, it is preferable that the debinding zone Z1 have a nitrogen source N₂ and a pipe L2 for feeding nitrogen gas to the debinding zone Z1. A sensor for measuring the oxygen concentration may also be disposed in the debinding zone Z1 as in the case of the replacement chamber R. The oxygen concentration in the debinding zone Z1 is preferably 5% by volume or less, more preferably 3% by volume or less, and further preferably 1% by volume or less. If the oxygen concentration in the debinding zone Z1 is more than 5% by volume, cracks tend to occur on the fired body. The lower limit value of the oxygen concentration in the debinding zone Z1 is not particularly limited, but is preferably 0.1% by volume, more preferably 0.3% by volume, and further preferably 0.5% by volume. In order that the oxygen concentration in the debinding zone Z1 is maintained to less than 0.1% by volume, it is required to sufficiently increase the airtightness of the debinding zone Z1. The oxygen concentration may be increased in the middle of the debinding zone Z1 to adjust combustion of an organic substance to such an extent as not to produce heat.

In order to adjust the temperature and the oxygen concentration in the debinding zone Z1, for example, a combustion gas may be fed from a combustion chamber 7 (see Figure 2). The combustion chamber 7 is connected to a pipe (not illustrated) for feeding a fuel and air, and the pipe is configured so as to be able to combust a fuel in the combustion chamber 7 and to adjust the temperature and the oxygen concentration of the combustion gas.

While the inner wall 1a of the tunnel kiln main body 1 is made of the heat-insulating material described above, it is provided with a metal case (lining) 1b with which at least the inner wall 1a of the debinding zone Z1 of the entire of the inner wall 1a is covered. The metal case 1b prevents tar generated in the furnace by the debinding treatment from being attached or soaked into the inner wall 1a. While the metal case 1b may be provided on at least the debinding zone Z1, the metal case 1b may also be provided so as to extend over the boundary at the inlet side of the debinding zone Z1 since tar is condensed at a place where the temperature is low. For example, the inner wall 1a may also be covered with the metal case 1b from a position immediately following the door D₂ of the replacement chamber R. In this case, the debinding zone Z1 has a region in which the organic component is to be gasified and a region in which the gasified organic component is to be condensed.

The material of the metal case 1b is not particularly limited as long as it can be withstand the temperature and the atmosphere of the debinding treatment, and examples thereof include stainless steel. Herein, the lining with which the inner wall 1a is covered is not limited to one made of metal, and may be, for example, one made of a ceramic material or the like. From the viewpoint of easiness of maintenance, however, a metal case having dense characteristics and having a flat inner surface is preferable. Herein, there is also an advantage of covering a furnace material containing air with the metal case 1b to thereby easily reduce the oxygen concentration in the debinding zone Z1.

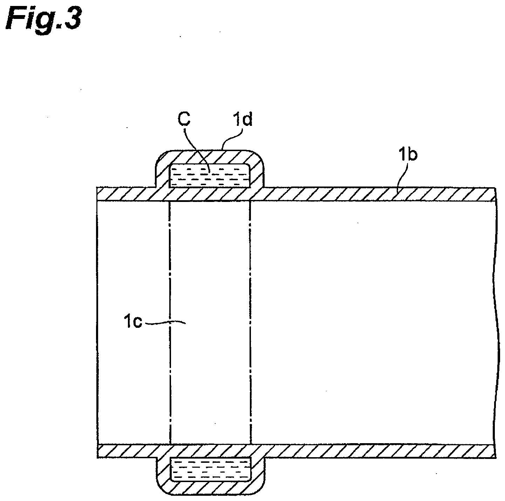

The metal case 1b has a cold spot 1c where the temperature of the surface is partially low (see Figure 3). The cold spot 1c is provided on the inner surface of the metal case 1b to thereby allow the gasified organic component to be easily cooled and condensed on the cold spot 1c. Thus, it is possible to inhibit tar from being attached to a wide range of the metal case 1b, and it is possible to make maintenance further effective. As illustrated in Figure 3, the cold spot 1c may be formed by changing a part of the metal case 1b to a double tube 1d to flow a cooling medium (for example, water) C into the tube, or may be formed by arranging a jacket for cooling on the outside of the metal case lb.

The sintering zone Z2 is a zone for performing firing of the green molded body 70 after debinding. The range of the sintering zone Z2 can be from a temperature at which the debinding treatment of the green molded body 70 is completed to a retention temperature for firing. From the viewpoint of preventing defects such as cracks from occurring at the time of raising the temperature of the body to be fired, the rate of temperature rise is preferably 100 to 20°C/hr and more preferably 80 to 40°C/hr. The rate of temperature rise can be set by adjusting the temperature distribution of the sintering zone Z2 or the speed of the wheeled platform 5. Depending on the composition of the green molded body 70 or the like, the firing temperature (retention temperature for firing) is preferably 1400°C or higher, more preferably 1450°C or higher, and further preferably 1500°C or higher.

The oxygen concentration in the sintering zone Z2 is not required to be particularly controlled, and is determined by the ratio of the amount of a fuel combusted to the amount of air used. While differing depending on the temperature, the oxygen concentration is usually about 5 to 15% by volume.

The cooling zone Z3 is a zone for gradually cooling the fired body. The range of the cooling zone Z3 can be from the retention temperature for firing to a temperature at which the fired body can be removed from a door D₃ to the outside. From the viewpoint of preventing defects such as cracks from occurring at the time of cooling the fired body, the rate of temperature drop is preferably 50 to 150°C/hr and more preferably 80 to 100°C/hr. The rate of temperature drop can be set by adjusting the temperature distribution of the cooling zone Z3 or the speed of the wheeled platform 5.

The oxygen concentration in the cooling zone Z3 is not particularly restricted, and is not required to be highly controlled as in the case of the debinding zone Z1. Herein, the cooling zone Z3 is not necessarily required as long as the temperature in the sintering zone Z2 is decreased at the time of terminating the treatment in the sintering zone Z2 to allow the fired body to be taken out, but the cooling zone Z3 is provided to thereby make such a temperature dropping operation unnecessary, making it possible to use the tunnel kiln 10 as a continuous type firing furnace.

A method for producing a fired body, comprising a step of firing the green molded body 70 using the tunnel kiln 10 to provide a honeycomb filter structure (fired body), is described. A method according to the present embodiment comprises the following step (1) to step (9).
(1) A step of preparing a raw material composition containing an inorganic compound source powder (inorganic compound), an organic binder, an additive and a solvent.
(2) A step of molding the raw material composition to provide the green molded body 70.
(3) A step of loading one or more of the green molded bodies 70 on the wheeled platform 5.
(4) A step of putting the wheeled platform 5 in the replacement chamber R, and then reducing the oxygen concentration in the replacement chamber R.
(5) A step of putting the wheeled platform 5 in the tunnel kiln main body 1 from the replacement chamber R, and then conveying the wheeled platform 5 from the inlet side to the outlet side of the tunnel kiln main body 1.
(6) A step of performing debinding of the green molded body 70 in the debinding zone Z1.
(7) A step of condensing the organic component gasified in step (6) on the surface of the metal case 1b.
(8) A step of performing sintering of a body to be fired, after debinding, in the sintering zone Z2.
(9)A step of cooling a fired body in the cooling zone Z3 to condense the gasified organic components on the spot.

According to the method for producing a fired body, even if tar is generated in the debinding zone Z1, the metal case 1b prevents tar from being attached or soaked into the furnace material. Even if being attached to the inner surface of the metal case 1b, tar can be easily cleaned off as compared with the case where tar is attached to the furnace material. In the case where the metal case 1b is degraded by tar or the like, only the metal case 1b may be replaced with new one. In addition, the cold spot 1c as illustrated in Figure 3 is provided on the metal case 1b and a gaseous organic component can be brought into contact with the cold spot 1c to thereby intensively condense tar on the spot. Thus, it is possible to inhibit tar from being attached to a wide range of the metal case 1b, and it is possible to make maintenance further effective.

Hereinabove, the suitable embodiment of the present invention is described in detail, but the present invention is not limited to the above embodiment. For example, the case of firing the green molded body 70 for producing a honeycomb filter structure is shown in the above embodiment, but the body to be fired that can be fired by the tunnel kiln of the present invention is not limited to this green molded body as long as it containes the organic component

For example, the case of reducing the oxygen concentration in the tunnel kiln main body 1 is shown in the above embodiment, but in the case of firing a green body made of a material excellent in sintering property, the oxygen concentration in the tunnel kiln main body 1 may not be necessarily reduced. In this case, the replacement chamber R is not necessarily required.

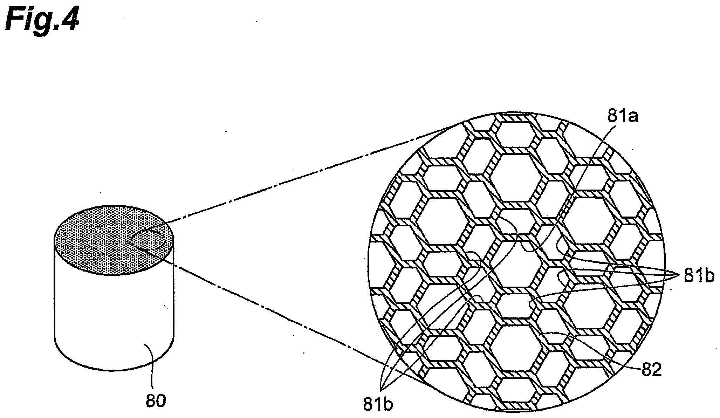

For example, the green molded body 70 that is a cylindrical body is shown in the above embodiment, but the shape or structure of the molded body is not limited thereto. The outer shape of the green molded body 70 may be, for example, a rectangular column such as quadrangular prism, or an elliptic column. In addition, the arrangement of the through-holes 70a may not be square arrangement, and may be, for example, substantially triangle arrangement or substantially hexagonal arrangement. Furthermore, the shape of the through-hole 70a may not be square, and may be, for example, a substantially triangle shape, a substantially hexagonal shape, a substantially octagonal shape, a substantially round shape, and a combination thereof. The combination of a plurality of shapes include a combination of a regular hexagonal shape and an asymmetric hexagonal shape (see Figure 4), and a combination of a quadrangle shape and an octagonal shape (octosquare).

A green molded body 80 illustrated in Figure 4 has a plurality of through-holes 81a and 81b whose cross-sectional shapes are different. The plurality of through-holes 81a and 81b are partitioned by a partition wall 82 that extends in substantially parallel to the central axis of the green molded body 80. The cross-sectional shape of each of the through-holes 81 a is a regular hexagonal shape. On the other hand, the cross-sectional shape of each of the through-holes 81b is a flat hexagonal shape and they are arranged so as to surround one of the through-hole 81a.

### <Measurement of organic component gasified in debinding step>

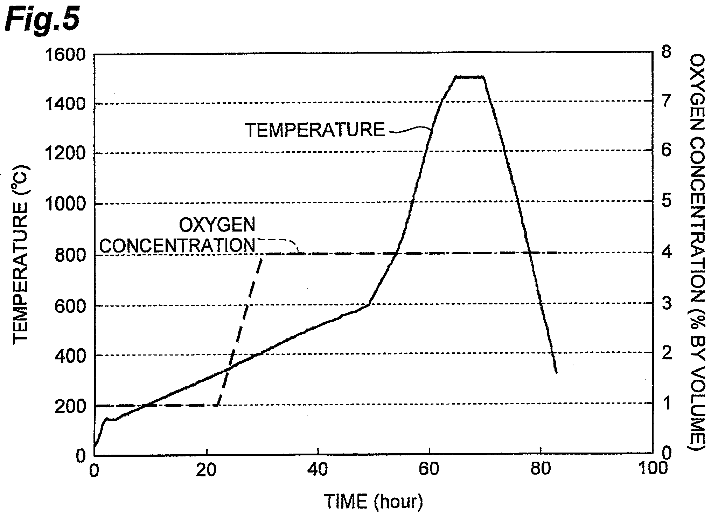

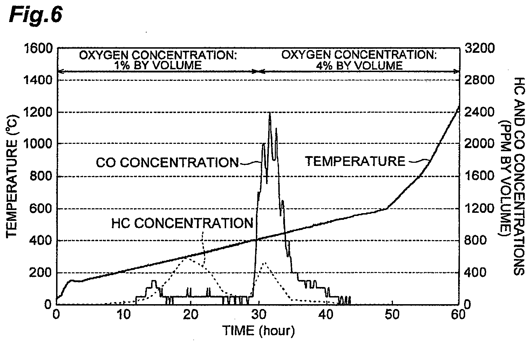

A green molded body having a shape illustrated in Figure 1 was prepared, and the green molded body was fired under the temperature and oxygen concentration conditions shown in Figure 5. Table 1 shows the raw material composition of the green molded body prepared in the present test. Herein, POAAE in Table represents polyoxyalkylene ether, and Unilube (registered trademark, produced by Nof Corporation) was used therefor. In the debinding step of the green molded body, the HC concentration and the carbon monoxide concentration in the furnace were measured. The results are shown in Figure 6. Herein, when the temperature in the furnace reached 400°C (28 hours after the start of the temperature rise), the oxygen concentration in the furnace was changed from 1% by volume to 4% by volume. The HC concentration was measured using FIDMAT6 (trade name) manufactured by SIEMENS. The CO concentration was measured using ULTRAMAT23 (trade name) manufactured by SIEMENS.

**[Table 1]**

| Material | | Blending ratio (parts by mass) |
|---|---|---|
| Ceramic powder | Al₂O₃-TiO₂-MgO-SiO₂ | 88.0 |
| Organic binder | Hydroxypropyl methylcellulose | 7.8 |
| Pore-forming agent | Starch | 12.0 |
| Lubricant | Glycerin + POAAE | 5.04 |
| Solvent | Water | 28.30 |

### Industrial Applicability

According to the present invention, a tunnel kiln whose maintenance is easy and where the lifetime of a furnace material can be longer even if tar is generated in a furnace in a debinding step of an organic component contained in a body to be fired, and a method for producing a fired body using the same are provided.

### Reference Signs List

1 ... tunnel kiln main body, 1a ... inner wall, 1b ... metal case, 1c ... cold spot, 5 ... wheeled platform (conveying unit), 10 ... tunnel kiln, 70, 80 ... green molded body (body to be fired), L2 ... pipe (oxygen concentration adjustment unit), N₂ ... nitrogen source (oxygen concentration adjustment unit), Z1 ... debinding zone, Z2 ... sintering zone, Z3 ... cooling zone.

## Claims

1. A tunnel kiln (10) comprising:
(a) a tunnel kiln main body (1) having an inner wall (1a) constituted by a furnace material, and having a debinding zone (Z1) and a sintering zone (Z2) wherein respectively debinding and sintering of a body to be fired containing an organic component are performed;
(b) a conveying unit (5) for conveying the body to be fired from an inlet side to an outlet side of the tunnel kiln main body (1); and
(c) a lining (1b) provided so that at least an inner wall of the debinding zone (Z1), of the inner wall of the tunnel kiln main body (1), is covered therewith,
(d) wherein the lining (1b) has a cold spot (1c) where the temperature of the surface of the lining is partially lower, and
(e) wherein the cold spot (1c) is formed by arranging a jacket for cooling on the outside of the lining (1b) or by means of a double tube (1d) arranged on the outside of the lining (1b) and adapted to flow a cooling medium.

2. The tunnel kiln according to claim 1, further comprising an oxygen concentration adjustment unit for reducing an oxygen concentration in the debinding zone (Z1).

3. The tunnel kiln according to claim 1 or 2, wherein the debinding zone (Z1) has a region where the organic component contained in the body to be fired is to be gasified and a region where the gasified organic component is to be condensed.

4. The tunnel kiln according to any one of claims 1 to 3, wherein, at an outlet side over the sintering zone (Z2), the tunnel kiln main body (1) further has a cooling zone (Z3) wherein the fired body is cooled.

5. A method for producing a fired body, in the kiln according to claim 1 comprising the steps of:
(A) conveying a body to be fired containing an organic component from an inlet side to an outlet side of a tunnel kiln (10) having an inner wall constituted by a furnace material;
(B) debinding the body to be fired in the tunnel kiln (10);
(C) condensing the organic component gasified in step (B) on a surface of a lining provided so that a part of the inner wall of the tunnel kiln is covered therewith; and
(D) sintering the body to be fired after debinding,
wherein the lining has a cold spot where the temperature of the surface of the lining is partially lower to thereby allow the gasified organic components to be easily cooled and condensed on the spot.

## Patentansprüche

1. Tunnelofen (10) mit:
(a) einem Tunnelofenhauptkörper (1) mit einer aus einem Ofenmaterial bestehenden Innenwand (1a) und mit einer Entbinderungszone (Z1) und einer Sinterzone (Z2), in denen ein Entbinderungs- und ein Sinterprozess für einen zu brennenden Körper durchgeführt werden, der eine organische Komponente enthält;
(b) einer Fördereinheit (5) zum Transportieren des zu brennenden Körpers von einer Einlassseite zu einer Auslassseite des Tunnelofenhauptkörpers (1); und
(c) einer Verkleidung (1b), die derart bereitgestellt wird, dass sie mindestens eine Innenwand der Entbinderungszone (Z1) der Innenwand des Tunnelofenhauptkörpers (1) abdeckt,
(d) wobei die Verkleidung (1b) eine Kaltstelle (1c) aufweist, wo die Temperatur der Oberfläche der Verkleidung teilweise niedriger ist, und
(e) wobei die Kaltstelle (1c) durch Anordnen eines Kühlmantels auf der Außenseite der Verkleidung (1b) oder durch ein Doppelrohr (1d) gebildet wird, das auf der Außenseite der Verkleidung (1b) angeordnet und dazu geeignet ist, von einem Kühlmittel durchströmt zu werden.

2. Tunnelofen nach Anspruch 1, ferner mit einer Sauerstoffkonzentrationseinstelleinheit zum Reduzieren einer Sauerstoffkonzentration in der Entbinderungszone (Z1).

3. Tunnelofen nach Anspruch 1 oder 2, wobei die Entbinderungszone (Z1) einen Bereich aufweist, in dem die in dem zu brennenden Körper enthaltene organische Komponente vergast werden soll, und einen Bereich, in dem die vergaste organische Komponente kondensiert werden soll.

4. Tunnelofen nach einem der Ansprüche 1 bis 3, wobei der Tunnelofenhauptkörper (1) an einer Auslassseite stromabwärts von der Sinterzone (Z2) ferner eine Kühlzone (Z3) aufweist, in der der gebrannte Körper gekühlt wird.

5. Verfahren zum Herstellen eines gebrannten Körpers im Tunnelofen nach Anspruch 1, mit den Schritten:
(A) Transportieren eines zu brennenden Körpers, der eine organische Komponente enthält, von einer Einlassseite zu einer Auslassseite eines Tunnelofens (10), der eine aus einem Ofenmaterial bestehende Innenwand aufweist;
(B) Entbindern des im Tunnelofen (10) zu brennenden Körpers;
(C) Kondensieren der in Schritt (B) vergasten organischen Komponente auf einer Oberfläche einer Verkleidung, die derart bereitgestellt wird, dass sie einen Teil der Innenwand des Tunnelofens abdeckt; und
(D) Sintern des zu brennenden Körpers nach dem Entbindern,
wobei die Verkleidung eine Kaltstelle aufweist, wo die Temperatur der Oberfläche der Verkleidung teilweise niedriger ist, um zu ermöglichen, dass die vergasten organischen Komponenten auf der Kaltstelle geeignet gekühlt werden und kondensieren.

## Revendications

1. Four tunnel (10) comprenant :
(a) un corps principal de four tunnel (1) ayant une paroi interne (la) constituée par un matériau de four et ayant une zone de suppression de liant (Z1) et une zone de frittage (Z2), dans lequel respectivement la suppression de liant et le frittage d'un corps à cuire contenant un composant organique sont réalisés ;
(b) une unité de transport (5) pour transporter le corps à cuire d'un côté d'entrée vers un côté de sortie du corps principal de four tunnel (1) ; et
(c) un revêtement (1b) prévu de sorte qu'au moins une paroi interne de la zone de suppression de liant (Z1) de la paroi interne du corps principal de four tunnel (1), est recouverte avec ce dernier,
(d) dans lequel le revêtement (1b) a un point froid (1c) où la température de la surface du revêtement est partiellement plus basse, et
(e) dans lequel le point froid (1c) est formé en agençant une chemise pour le refroidissement sur l'extérieur du revêtement (1b) ou au moins d'un double tube (1d) agencé sur l'extérieur du revêtement (1b) et adapté pour laisser s'écouler un milieu de refroidissement.

2. Four tunnel selon la revendication 1, comprenant en outre une unité d'ajustement de concentration d'oxygène pour réduire une concentration d'oxygène dans la zone de suppression de liant (Z1).

3. Four tunnel selon la revendication 1 ou 2, dans lequel la zone de suppression de liant (Z1) a une région où le composant organique contenu dans le corps à cuire doit être gazéifié et une région où le composant organique gazéifié doit être condensé.

4. Four tunnel selon l'une quelconque des revendications 1 à 3, dans lequel, au niveau d'un côté de sortie sur la zone de frittage (Z2), le corps principal de four tunnel (1) a en outre une zone de refroidissement (Z3), dans lequel le corps cuit est refroidi.

5. Procédé pour produire un corps cuit dans le four selon la revendication 1, comprenant les étapes consistant à :
(A) transporter un corps à cuire contenant un agent organique d'un côté d'entrée vers un côté de sortie d'un four tunnel (10) ayant une paroi interne constituée par un matériau de four ;
(B) supprimer le liant du corps à cuire dans le four tunnel (10) ;
(C) condenser le composant organique gazéifié à l'étape (B) sur une surface d'un revêtement prévu de sorte qu'une partie de la paroi interne du four tunnel est recouverte avec ce dernier ; et
(D) fritter le corps à cuire après avoir supprimer le liant,
dans lequel le revêtement a un point froid où la température de la surface du revêtement est partiellement plus basse pour permettre ainsi aux composants organiques gazéifiés d'être facilement refroidis et condensés sur le point.
